# EUROPÄISCHE PATENTSCHRIFT

(11) **EP 2 012 296 B1**
(45) Veröffentlichungstag und Bekanntmachung des Hinweises auf die Patenterteilung: **07.11.2012**
(21) Anmeldenummer: 08159380.8
(22) Anmeldetag: 01.07.2008
(51) Int. Cl.: G09F 21/00, G09F 21/04, G09F 23/06, B62B 3/14, G09F 15/00, G09F 13/04

(54) **Werbeträgerelement für eine Stange**
Advertising holder element for a rod
Elément de support publicitaire pour une barre

(30) Priorität: 06.07.2007 AT 4252007 U
(43) Veröffentlichungstag der Anmeldung: 07.01.2009
(73) Patentinhaber: Strasser, Burkhard, 1180 Wien (AT)
(72) Erfinder: Strasser, Burkhard, 1180 Wien (AT)
(74) Vertreter: Babeluk, Michael

(56) Entgegenhaltungen:
- EP-A1- 1 344 705
- WO-A1-97/15039
- WO-A2-01/51329

## Beschreibung

Die Erfindung betrifft ein Werbeträgerelement für eine Stange , insbesondere für einen Bügel eines Sesselliftes, mit zumindest einem einen Aufnahmebereich für ein Werbemittel ausbildenden Gehäuse, welches fest oder verdrehbar auf der Stange montierbar ist, wobei der Aufnahmebereich durch einen abnehmbaren Deckelteil abdeckbar ist, wobei der Deckelteil über zumindest eine Befestigungseinrichtung mit dem Gehäuse fest verbindbar ist.

Es ist bekannt, Bügel von Sesselliften als Werbeträger einzusetzen. Dabei wird ein zweiteiliges Werbeträgerelement mit einem Werbemittel am Bügel befestigt, beispielsweise durch zwei Gehäusehalbteile aufgeklemmt. Ein aus zwei identischen Halbschalen bestehender Werbeträger für Einkaufswagen ist etwa aus der WO 1997/015039 A1 bekannt. Ein weiterer Werbeträger mit an einem Bügel eines Schiliftes aufklemmbaren Halbschalen ist aus der FR 2 501 026 A1 bekannt. Derartige Werbeträgerelemente mit zwei am Bügel aufklemmbaren Gehäuseteilen sind einfach in der Herstellung und ausreichend robust gegen mutwillige Beschädigungen und Demontageversuche.

Nachteilig ist, dass bei einem Austausch des innerhalb des Werbeträgerelementes angeordneten Werbemittels jedes Werbeträgerelement vom Bügel demontiert und nach Austausch des Werbemittels wieder auf dem Bügel befestigt werden muss. Diese bei jedem einzelnen Sessel des Sesselliftes anfallenden Tätigkeiten sind äußerst zeitaufwendig, weshalb der Austausch des Werbemittels üblicherweise nur in größeren Zeitabständen durchgeführt wird.

Die WO 01/51329 A1 beschreibt ein Werbeträgerelement für Sessellifte, wobei zwischen einem Hauptkörper und abnehmbaren Deckelteilen Werbemittel angeordnet sind. Die Deckelteile sind dabei auf dem Hauptkörper quer zur Längsachse des Werbeträgerelementes aufsteckbar, wobei eine Vielzahl von Zapfen der Deckelteile in Aufnahmeöffnungen des Werbemittels und des Hauptkörpers eingeführt werden müssen. Nachteilig ist, dass in den Werbemitteln Öffnungen zur Aufnahme der Zapfen vorgesehen werden müssen und dass die Zapfen beim Aufstecken leicht beschädigt werden können. Das genau Positionieren der Deckelteile und das Einführen der Zapfen in die Aufnahmeöffnungen ist relativ zeitaufwändig.

Aus der EP 1344705 A1 ist ein Griff für einen Einkaufswagen mit einem auf einer Stange angebrachten Trägerelement für Informationsmaterial bekannt, wobei das in das Trägerelement eingelegte Informationsmaterial durch einen klappbaren Deckel abdeckbar ist. Das Trägerelement weist dabei die Montageöffnungen an der Unterseite zur Aufnahme eines Demontagewerkzeuges auf, um den Deckel öffnen zu können. Der Klappmechanismus des Deckels erfordert zusätzlichen Bauraum und kann - bei falscher Betätigung - leicht beschädigt werden.

Aufgabe der Erfindung ist es, diese Nachteile zu vermeiden und einen raschen Wechsel des Werbemittels zu ermöglichen.

Erfindungsgemäß wird dies dadurch erreicht, dass der Deckelteil - im Querschnitt auf die Stange betrachtet - in Richtung einer Passante der Stange, oder in Richtung der Achse der Stange auf das Gehäuse aufschiebbar ist. Der Aufnahmebereich für das Werbemittel wird somit durch einen eigenen Deckelteil verschlossen.

Die Befestigungseinrichtung kann zumindest eine Rasteinrichtung und/oder zumindest eine Schraubverbindung und/oder zumindest eine Steckverbindung aufweisen.

Der Tausch des vorzugsweise an der Innenseite des Deckelteils angebrachten, beispielsweise angeklebten Werbemittels kann durch einfaches Abnehmen des Deckelteils erfolgen, ohne dass das Gehäuse vom Bügel des Sesselliftes demontiert werden muss. Es ist auch denkbar, dass das Werbemittel durch den Deckelteil selbst gebildet wird, wobei der Austausch der Werbemittel durch Wechseln der kompletten Deckelteile erfolgt. Weiters können die Werbemittel auch durch im Aufnahmebereich eingelegte oder eingeklebte Foliendisplays gebildet sein.

Vorzugsweise ist vorgesehen, dass der Deckelteil an zwei gegenüberliegenden Rändern in Führungen des Gehäuses verschiebbar ist, wobei der Deckelteil am Ende des Verschiebeweges in seiner Verschlussstellung durch die Rastverbindung fixiert ist. Das Aufstecken des Deckelteiles ist auf jeden Fall ohne besonderes Werkzeug in sehr kurzer Zeit möglich.

Um ein sicheres Verschließen des Deckelteils am Gehäuse zu gewährleisten, ist es vorteilhaft, wenn die Rasteinrichtung zumindest einen, vorzugsweise zumindest zwei, besonders vorzugsweise zumindest drei Rasthaken aufweist.

Um unbefugte Demontage des Deckelteiles zu vermeiden, ist die Rasteinrichtung verdeckt innerhalb des Gehäuses untergebracht. Dabei ist es besonders vorteilhaft, wenn das Gehäuse in einem dem Deckel abgewandten und/oder seitlichen Gehäusebereich zumindest eine Demontageöffnung für ein einschiebbares Werkzeug aufweist. Weiters kann zur Vermeidung von unbefugter Demontage des Deckelteils als zusätzliche Sicherung zumindest eine nur mit Spezialwerkzeug zu lösende Schraubverbindung, z.B. eine Schraube mit Spezialkopf, vorgesehen sein.

Da der Deckelteil zumindest im Bereich des Werbemittels transparent ausgebildet ist, ist das Werbemittel bei geschlossenem Deckelteil gut erkenn- und lesbar. Eine einfache Bedienbarkeit und Herstellbarkeit des Werbeträgerelementes ist gegeben, wenn der Deckelteil im Wesentlichen flach ausgebildet ist. Um möglichst geringe Angriffsflächen für Beschädigungen zu bieten, kann die Außenseite des Deckteils konvex gekrümmt sein. Die Gefahr von Beschädigungen, Verschmutzungen und Verletzungen kann weiters gering gehalten werden, wenn der aufgeschobene Deckelteil bündig mit dem umgebenden Gehäuse abschließt.

Um ein Durchbiegen des Werbemittels und/oder des Deckelteils zu vermeiden, ist es vorteilhaft, wenn das Gehäuse zumindest eine an den Aufnahmebereich grenzende Rippe aufweist. Die Rippen dienen auch zur Versteifung des Gehäuses.

In weiterer Ausbildung der Erfindung kann vorgesehen sein, dass das Werbemittel durch eine veränderbare Anzeige, vorzugsweise durch ein Foliendisplay gebildet ist, wobei eine Beleuchtungseinrichtung, vorzugsweise eine Hintergrundbeleuchtung, für das Werbemittel vorgesehen sein kann. Besonders vorteilhaft ist es dabei, wenn das Werbemittel auch zur Anzeige von Informationen, Warnhinweisen oder dergleichen ausgebildet ist, wobei vorzugsweise Daten und/oder Betriebsenergie über eine besonders vorzugsweise temporär stromleitende Verbindung oder eine leitungslose Verbindung übertragen werden.

Die Erfindung wird im Folgenden anhand der Figuren näher erläutert. Es zeigen:
- Fig. 1: ein erfindungsgemäßes Werbeträgerelement in einer Schrägansicht in einer ersten Ausführungsvariante;
- Fig. 2: das Werbeträgerelement in einer Explosionsdarstellung;
- Fig. 3: das Werbeträgerelement in einer Schrägansicht von der dem Betrachter abgewandten Seite;
- Fig. 4: das Werbeträgerelement in einem Schnitt gemäß der Linie IV - IV in Fig.1;
- Fig. 5: das erfindungsgemäße Werbeträgerelement in einer Schrägansicht in einer zweiten Ausführungsvariante;
- Fig. 6: das Werbeträgerelement in einem Schnitt gemäß der Linie VI-VI in Fig. 5;
- Fig. 7: das Werbeträgerelement in einem Schnitt gemäß der Linie VII-VII in Fig. 5;
- Fig. 8: den Oberteil des Werbeträgerelementes aus Fig. 5 in einer Schrägansicht;
- Fig. 9: das Werbeträgerelement in einem Schnitt gemäß der Linie IX-IX in Fig. 5;
- Fig. 10: den Deckelteil des Werbeträgerelementes aus Fig. 5; und
- Fig. 11: den Oberteil aus Fig. 8 in einer weiteren Schrägansicht.

Das Werbeträgerelement 1 weist ein Gehäuse 2 mit einem Unterteil 3 und einem Oberteil 4 auf. Das Unterteil 3 und das Oberteil 4 des Gehäuses 2 sind auf eine Stange 5, beispielsweise einem Bügel eines Sesselliftes, einer Haltestange eines Verkehrsmittels, einem Einkaufswagen oder dergleichen, aufklemmbar, wobei der Unterteil 3 und der Oberteil 4 die Stange 5 umfassen. Unter- und Oberteil 3, 4 können dabei unterschiedliche Bauhöhen aufweisen, um bei Anwendung bei einem Bügel eines Sesselliftes möglichst große Beinfreiheit des Benutzers sicherzustellen. Der Oberteil 4 des Gehäuses 2 bildet einen Aufnahmebereich 6 für ein Werbemittel 7 aus, wobei der Aufnahmebereich 6 durch einen zumindest im Bereich des Werbemittels 7 transparent ausgebildeten Deckelteil 8 abdeckbar ist. Das Werbemittel kann an der beispielsweise flach ausgebildeten Unterseite des Deckelteiles 8 angebracht sein, beispielsweise in Form einer haftenden Folie.

Die Anpassung des Gehäuses 2 an verschiedene Stangendurchmesser erfolgt beispielsweise über nicht weiter dargestellte Reduktionshülsen. Der Unter- und der Oberteil 3, 4 des Gehäuses 2 werden gegeneinander verschraubt, wodurch auf Grund der Passgenauigkeit eine so hohe Klemmwirkung erreicht wird, dass sich der Werbeträger 1 nicht verdrehen lässt. Die Schrauben sind durch den Deckelteil 8 abgedeckt und somit dem Betrachter nicht zugänglich. Zur Stützung des Deckelteils 8 und des Werbemittels 7 sowie zur Versteifung des Gehäuses 2 sind mehrere Rippen 21 vorgesehen.

Zur Befestigung des Deckteiles 8 am Gehäuse 2 ist zumindest eine Befestigungseinrichtung 16 vorgesehen, welche aus Führung 9, 10 des Oberteiles 4, Rasteinrichtungen 12 und/oder Schraubverbindungen 17 besteht.

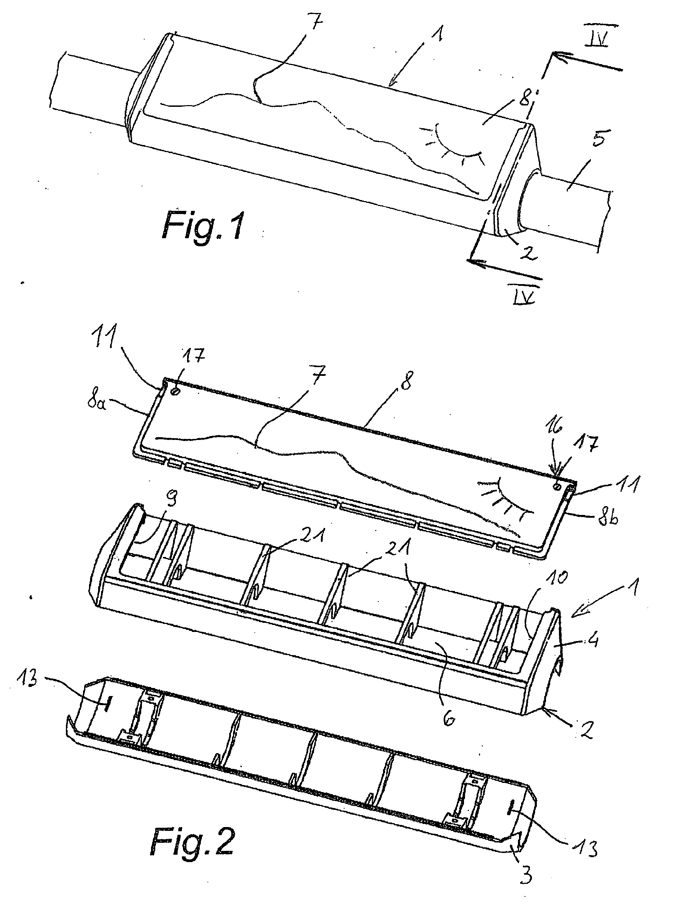

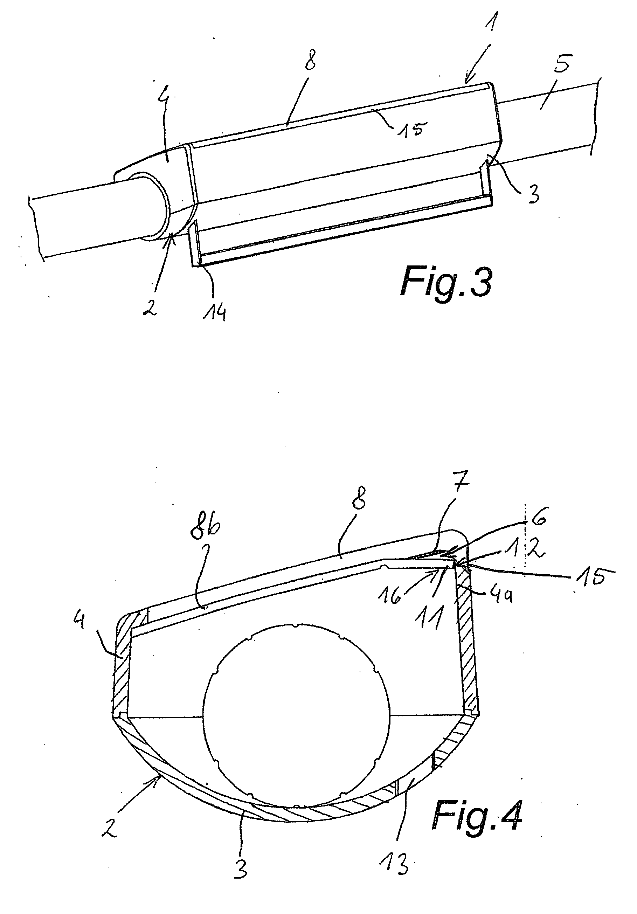

Im in den Fig. 1 bis Fig. 4 dargestellten ersten Ausführungsbeispiel ist der Deckelteil 8 in gegenüberliegende Führungen 9, 10 des Gehäuses 2 einschiebbar, wobei gegenüberliegende Ränder 8a, 8b des Deckelteiles 8 in den Führungen 9, 10 gehalten werden. In der in Fig. 4 dargestellten Schließposition des Deckelteiles 8 wird der Deckelteil 8 über eine mehrere Rasthaken 11 aufweisende Rasteinrichtung 12 fixiert. Die Rasthaken 11 sind dabei als elastisch verbiegbare Fortsätze der Ränder 8a, 8b des Deckelteils 8 ausgebildet, welche bei geschlossenem Deckelteil 8 an der Gehäusewand 4a des Oberteils 4 anliegen. Zusätzlich oder anstelle der Rasteinrichtung 12 können Schraubverbindungen 17 vorgesehen sein.

Die Rasthaken 11 sind im Bereich der Ränder 8a, 8b, und eventuell auch an einer Längsseite des Deckelteiles 8 in zumindest einem mittleren Bereich angeordnet.

Der Unterteil 3 des Gehäuses 2 weist im ersten Ausführungsbeispiel 2 Montageöffnungen 13 auf, durch welche ein Demontagewerkzeug 14 eingeschoben werden kann, um den Deckelteil 8 zu öffnen. Dazu werden die Rasthaken 11 nach oben gedrückt, sodass diese nicht mehr an der Gehäusewand 4a aufliegen. Dadurch kann der Deckelteil 8 vom Gehäuse 2 entfernt werden. Die Montageöffnungen 13 ermöglichen weiters die Belüftung des Gehäuses 2 und ein Abfließen von eventuell sich bildendem Kondenswasser.

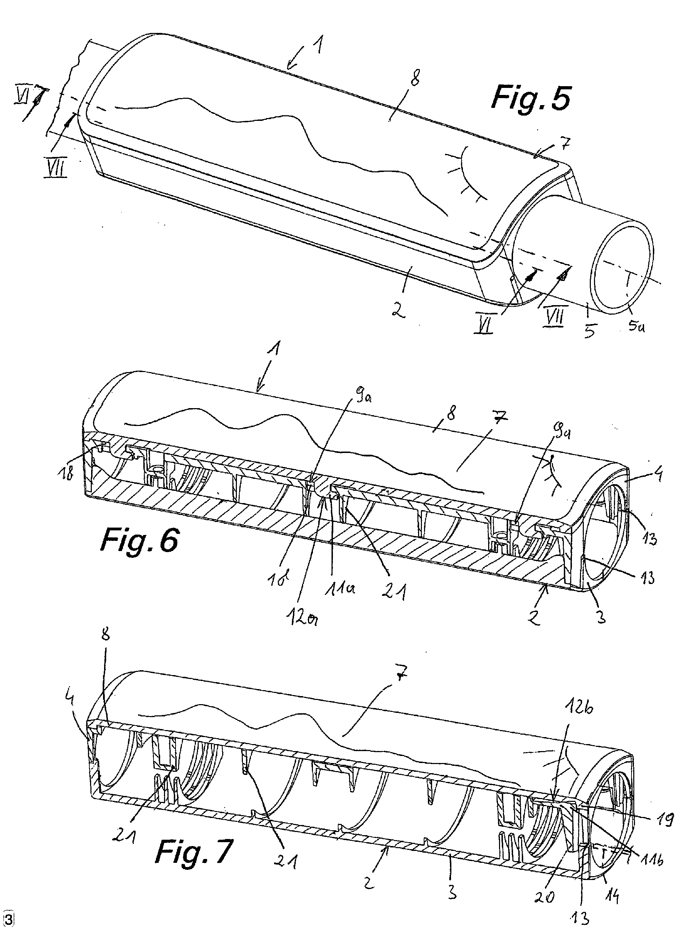

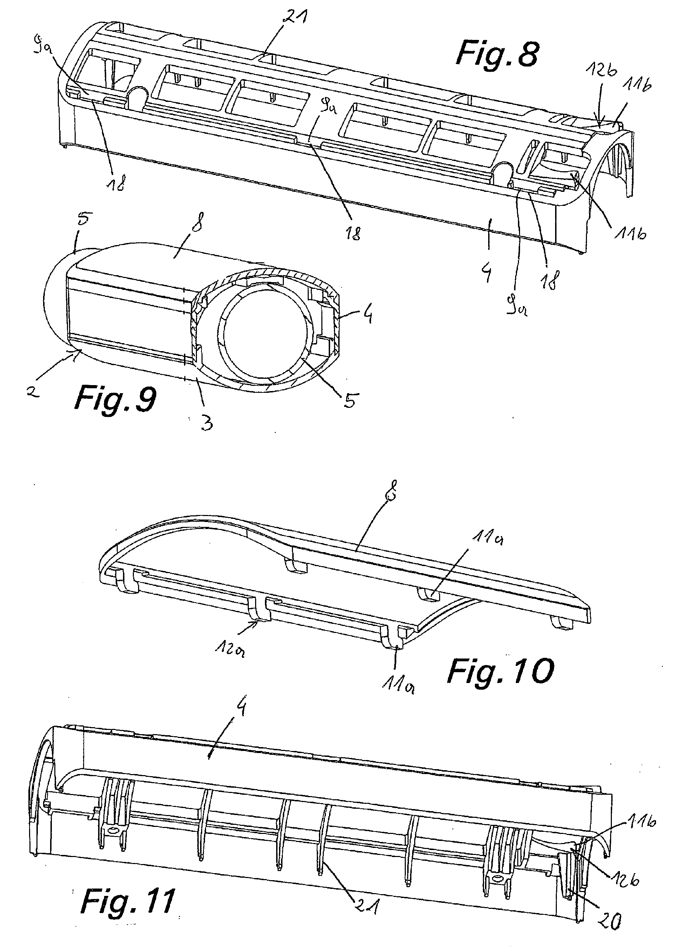

Die Fig. 5 bis Fig. 11 zeigen eine weiter Ausführungsvariante eines Werbeträgerelementes 1, welche sich von der ersten Ausführungsvariante im Wesentlichen dadurch unterscheidet, dass der Deckelteil 8 in Richtung der Achse 5a der Stange 5 auf den Oberteil 4 des Gehäuses 2 aufgeschoben wird. Zur Befestigung des Deckelteiles 8 am Gehäuse 2 ist dabei eine erste Rasteinrichtung 12a und eine zweite Rasteinrichtung 12b vorgesehen. Die erste Rasteinrichtung 12a weist dabei erste Rasthaken 11a auf, welche in durch Langöffnungen 18 des Gehäuses 2 gebildete Führungen 9a eingreifen und zwischen einer Öffnungsstellung und einer Schließstellung verschiebbar sind, wobei der Deckelteil 8 am Ende des Verschiebeweges in seiner Verschlussstellung durch die ersten Rasthaken 11a fixiert wird. Um ein unbeabsichtigtes Öffnen des Deckelteiles 8 zu verhindern, wird dieser durch eine zweite Rasteinrichtung 12b, welche aus mit dem Oberteil 4 verbundene zweite Rasthaken 11b besteht, in der Verschlussstellung gehalten, wie aus Fig. 7 hervorgeht. Dabei greifen zwei beidseits der Stange 5 angeordnete zweite Rasthaken 11b an einer vorspringenden Haltekante 19 des Deckelteils 8 an, wobei die zweiten Rasthaken 11b elastisch gegen den Deckelteil 8 gedrückt werden.

Auf der gleichen Stirnseite des Gehäuses 2 wie die zweiten Rasthaken 11b sind dabei im Gehäuse 2 stirnseitige Montageöffnungen 13 vorgesehen, durch welche ein Demontagewerkzeug 14 in Richtung der Längsachse 5a der Stange 5 eingeschoben werden kann, um die zweite Rasteinrichtung 12b zu lösen. Das Montagewerkzeug 14 greift dabei an einem mit dem zweiten Rasthaken 11b verbundenen Hebelteil 20 an, wodurch der zweite Rasthaken vom Deckelteil 8 weggedrückt wird und somit die Haltekante 19 freigibt. In diesem Zustand ist somit ein unbehindertes Öffnen des Deckelteiles 8 möglich, um das Werbemittel zu tauschen.

Der Deckelteil 8 schließt bündig mit dem umgebendem Oberteil 4 des Gehäuse 2 ab, um Schutz vor Verschmutzungen, Schnee und vor Verletzungen zu bieten. Um ein Eindringen von Wasser zu vermeiden, weist der Deckelteil 8 an zumindest einer Seite eine Überdeckung 15 bezüglich des umgebenden Oberteils 4 des Gehäuses 2 auf. Zusätzlich können nicht weiter dargestellte Dichtungsmittel vorgesehen sein. Eine leichte konkave Wölbung an der Außenseite bietet Schutz vor Beschädigung, beispielsweise durch Skistöcke.

Das Werbemittel 7 kann im einfachsten Fall durch eine Werbefolie gebildet sein. Weiters ist es möglich als Werbemittel 7 ein veränderbares Werbedisplay, beispielsweise ein zum Beispiel organische LCD aufweisendes Foliendisplay, ein bewegbares Folienband oder andere verstellbare Werbemittel zu verwenden. Gegebenenfalls kann das Werbemittel 7 auch mit einer Beleuchtungseinrichtung, beispielsweise einer Hintergrundbeleuchtung, ausgestattet sein. Es ist darüber hinaus auch möglich, das Werbemittel 7 oder das Werbeträgerelement 1 zur Realisierung von interaktiven Funktionen mit Betätigungsknöpfen oder mit einer berührungssensitiven Oberfläche (Touch Screen) auszustatten. Bei Verwendung eines elektrischen oder elektronischen Werbemittels kann das Gehäuse 2 im Inneren eine elektrische Steckverbindung aufweisen, an welche das elektrische oder elektronische Werbemittel angeschlossen wird. Über diese Steckverbindung kann das Werbemittel, beispielsweise innerhalb der Stange 5, mit Daten und/oder Strom versorgt werden. Wird das Werbeträgerelement 1 beispielsweise bei einem Sessellift verwendet, so kann die Daten- und Stromversorgung zum elektrischen oder elektronischen Werbemittel während des Aufenthaltes in der Berg-oder Talstation erfolgen. Dabei ist es besonders vorteilhaft, wenn im Gehäuse 2 ein Raum für eine Pufferbatterie vorgesehen ist, um das elektrische oder elektronische Werbemittel außerhalb der Berg- und Talstationen mit Strom zu versorgen. Alternativ dazu kann die Datenübertragung aber auch auf drahtlosem Wege, beispielsweise über Funk erfolgen.

Durch Einsatz eines elektrischen oder elektronischen Werbemittels können neben Werbungen auch Informationen und Warnhinweise angezeigt werden. Ferner ist es auch denkbar, das elektrische oder elektronische Werbemittel zu Unterhaltungszwecken, beispielsweise zur Anzeige von Kurzfilmen oder für interaktive Spiele, zu verwenden.

## Patentansprüche

1. Werbeträgerelement (1) für eine Stange (5), insbesondere für einen Bügel eines Sesselliftes, mit zumindest einem einen Aufnahmebereich (6) für ein Werbemittel (7) ausbildenden Gehäuse (2), welches fest oder verdrehbar auf der Stange (5) montierbar ist, wobei der Aufnahmebereich (6) durch einen abnehmbaren Deckelteil (8) abdeckbar ist, wobei der Deckelteil (8) über zumindest eine Befestigungseinrichtung (16) mit dem Gehäuse (2) fest verbindbar ist, **dadurch gekennzeichnet, dass** der Deckelteil (8) - im Querschnitt auf die Stange (5) betrachtet - in Richtung einer Passante der Stange (5), oder in Richtung der Achse (5a) der Stange (5) auf das Gehäuse aufschiebbar ist.

2. Werbeträgerelement (1) nach Anspruch 1, **dadurch gekennzeichnet, dass** die Befestigungseinrichtung (16) zumindest eine, vorzugsweise nur mit Spezialwerkzeug zu demontierende, Schraubverbindung (17) oder Steckverbindung aufweist.

3. Werbeträgerelement (1) nach Anspruch 1 oder 2, **dadurch gekennzeichnet, dass** die Befestigungseinrichtung (16) zumindest eine Rasteinrichtung (12; 12a, 12b) aufweist.

4. Werbeträgerelement (1) nach einem der Ansprüche 1 bis 3, **dadurch gekennzeichnet, dass** der Deckelteil (8) vorzugsweise im Bereich zweier gegenüberliegender Ränder (8a, 8b) in Führungen (9, 10) des Gehäuses (2) verschiebbar ist, wobei der Deckelteil (8) am Ende des Verschiebeweges in seiner Verschlussstellung durch die Rastverbindung (12; 12a, 12b) fixiert ist.

5. Werbeträgerelement (1) nach einem der Ansprüche 1 bis 4, **dadurch gekennzeichnet, dass** der Deckelteil (8) im Wesentlichen flach ausgebildet ist, wobei vorzugsweise die Außenseite des Deckelteils (8) konvex gekrümmt ist und wobei besonders vorzugsweise der aufgeschobene Deckelteil (8) bündig mit dem umgebenden Gehäuse (2) abschließt.

6. Werbeträgerelement (1) nach einem der Ansprüche 2 bis 5, **dadurch gekennzeichnet, dass** die Rasteinrichtung (12; 12a, 12b) zumindest einen, vorzugsweise zumindest zwei, besonders vorzugsweise zumindest drei Rasthaken (11; 11a, 11b) aufweist.

7. Werbeträgerelement (1) nach einem der Ansprüche 1 bis 6, **dadurch gekennzeichnet, dass** das Gehäuse (2) in einem dem Deckelteil (8) abgewandten und/oder seitlichen Gehäusebereich zumindest eine Demontageöffnung (13) für ein Demontagewerkzeug (14) aufweist.

8. Werbeträgerelement (1) nach einem der Ansprüche 1 bis 7, **dadurch gekennzeichnet, dass** das Gehäuse (2) zumindest eine an den Aufnahmebereich (6) grenzende Rippe (21) aufweist.

9. Werbeträgerelement (1) nach einem der Ansprüche 1 bis 8, **dadurch gekennzeichnet, dass** das Werbemittel (7) auf der dem Gehäuse (2) zugewandeten Innenseite des Deckelteils (8) angebracht, vorzugsweise aufgeklebt ist.

10. Werbeträgerelement (1) nach einem der Ansprüche 1 bis 9, **dadurch gekennzeichnet, dass** das Werbemittel (7) durch eine veränderbare Anzeige, vorzugsweise durch ein Foliendisplay gebildet ist.

11. Werbeträgerelement (1) nach einem der Ansprüche 1 bis 10, **dadurch gekennzeichnet, dass** eine Beleuchtungseinrichtung, vorzugsweise eine Hintergrundbeleuchtung, für das Werbemittel (7) vorgesehen ist.

12. Werbeträgerelement (1) nach einem der Ansprüche 1 bis 11, **dadurch gekennzeichnet, dass** das Werbemittel (7) auch zur Anzeige von Informationen, Warnhinweisen oder dergleichen ausgebildet ist, wobei vorzugsweise Daten und/oder Betriebsenergie über eine vorzugsweise besonders temporär stromleitende Verbindung oder eine leitungslose Verbindung übertragen werden.

## Claims

1. Carrier element for advertising media (1) to be mounted on a bar (5), in particular the safety bar of a chair lift, comprising a housing (2) with at least one receiving area (6) for an advertising medium (7), which housing may be rigidly or rotatably attached to said bar (5), the receiving area (6) being covered by a detachable cover part (8), which cover part (8) can be attached to the housing (2) by an attaching means (16), **characterised in that** the cover part (8) - as seen in cross-section of the bar (5) - may be slipped onto the housing in the direction of a line passing through the bar (5) or in the direction of the axis (5a) of the bar (5).

2. Carrier element for advertising media (1) according to claim 1, **characterised in that** the attaching means (16) has at least one screw connection (17) or plug-in connection, which preferably requires a special tool for opening.

3. Carrier element for advertising media (1) according to claim 1 or 2, **characterised in that** the attaching means (16) is provided with at least one locking means (12; 12a, 12b).

4. Carrier element for advertising media (1) according to any of claims 1 to 3, **characterised in that** the cover part (8) is slideable in the area between two opposing edges (8a, 8b) in guidances (9, 10) of the housing (2), the cover part (8) being fixed by locking means (12; 12a, 12b) in its closed position at the end of its sliding path.

5. Carrier element for advertising media (1) according to any of claims 1 to 4, **characterised in that** the cover part (8) is essentially flat, the outer side of the cover part (8) preferably having convex curvature, and the cover part (8) in its slid-on state preferably being flush with the surrounding housing (2).

6. Carrier element for advertising media (1) according to any of claims 2 to 5, **characterised in that** the locking means (12; 12a, 12b) is provided with at least one, preferably two and particularly preferably three locking hooks (11; 11a, 11b).

7. Carrier element for advertising media (1) according to any of claims 1 to 6, **characterised in that** the housing (2) has at least one disassembly opening (13) for a disassembly tool (14) in an area of the housing opposite the cover part (8) and/or in a lateral area.

8. Carrier element for advertising media (1) according to any of claims 1 to 7, **characterised in that** the housing (2) has at least one rib (21) adjacent to the receiving area (6).

9. Carrier element for advertising media (1) according to any of claims 1 to 8, **characterised in that** the advertising medium (7) is applied, and preferably glued, to the inside of the cover part (8) facing the housing (2).

10. Carrier element for advertising media (1) according to any of claims 1 to 9, **characterised in that** the advertising medium (7) is configured as a variable display, preferably a transparency display.

11. Carrier element for advertising media (1) according to any of claims 1 to 10, **characterised in that** a lighting device, preferably a back-light device, is provided for the advertising medium (7).

12. Carrier element for advertising media (1) according to any of claims 1 to 11, **characterised in that** the advertising medium (7) is designed such that information, warning messages or the like may also be displayed, with data and/or operating power being transmitted via a preferably temporary electrically conductive connection or a wireless connection.

## Revendications

1. Elément de support publicitaire (1) pour une barre (5), notamment pour un arceau de siège de remontée mécanique ayant au moins un boîtier (2) avec une zone de réception (6) pour recevoir un document publicitaire (7), le boîtier étant installé solidairement ou libre en rotation sur la barre (5),
- la zone de réception (6) étant couverte par une partie de couvercle (8) amovible,
- la partie de couvercle (8) étant reliée solidairement au boîtier (2) par au moins une installation de fixation (16),
élément **caractérisé en ce que**
la partie de couvercle (8) considérée selon la section de la barre (5) s'emmanche sur le boîtier dans la direction du passage de la barre (5) ou dans la direction de l'axe (5a) de la barre (5).

2. Elément de support publicitaire (1) selon la revendication 1,
**caractérisé en ce que**
l'installation de fixation (16) comporte au moins une liaison vissée (17) ou une liaison enfichée qui ne se démonte de préférence qu'avec un outillage spécial.

3. Elément de support publicitaire (1) selon la revendication 1 ou 2,
**caractérisé en ce que**
l'installation de fixation (16) comporte au moins une installation d'encliquetage (12, 12a, 12b).

4. Elément de support publicitaire (1) selon l'une des revendications 1 à 3,
**caractérisé en ce que**
la partie de couvercle (8) coulisse de préférence dans la zone de deux bords opposés (8a, 8b) dans des guides (9, 10) du boîtier (2),
la partie de couvercle (8) étant fixée à l'extrémité du mouvement coulissant dans sa position de fermeture par la liaison d'enclipsage (12, 12a, 12b).

5. Elément de support publicitaire (1) selon l'une des revendications 1 à 4,
**caractérisé en ce que**
la partie de couvercle (8) est de forme essentiellement plate et de préférence le côté extérieur de la partie de couvercle (8) est de forme convexe et d'une manière particulièrement préférentielle, la partie de couvercle (8) emmanchée est à niveau avec le boîtier (2) qui l'entoure.

6. Elément de support publicitaire (1) selon l'une des revendications 2 à 5,
**caractérisé en ce que**
l'installation d'enclipage (12, 12a, 12b) comporte au moins un et de préférence au moins deux crochets d'enclipage et d'une manière particulièrement préférentielle au moins trois crochets d'enclipage (11, 11a, 11b).

7. Elément de support publicitaire (1) selon l'une des revendications 1 à 6,
**caractérisé en ce que**
le boîtier (2) comporte une ouverture de démontage (13) pour un outil de démontage (14) dans une zone de boîtier non tournée vers le couvercle (8) et/ou dans une zone latérale du boîtier.

8. Elément de support publicitaire (1) selon l'une des revendications 1 à 7,
**caractérisé en ce que**
le boîtier (2) comporte au moins une nervure (21) délimitant la zone de réception (6).

9. Elément de support publicitaire (1) selon l'une des revendications 1 à 8,
**caractérisé en ce que**
le document publicitaire (7) est placé sur le côté intérieur de la partie de couvercle (8) tourné vers le boîtier (2), de préférence en étant collé.

10. Elément de support publicitaire (1) selon l'une des revendications 1 à 9,
**caractérisé en ce que**
le document publicitaire (7) est constitué par un affichage variable, de préférence un affichage sous forme de film.

11. Elément de support publicitaire (1) selon l'une des revendications 1 à 10,
**caractérisé par**
une installation d'éclairage, de préférence un éclairage de fond pour le document publicitaire (7).

12. Elément de support publicitaire (1) selon l'une des revendications 1 à 11,
**caractérisé en ce que**
le document publicitaire (7) est réalisé également pour afficher les informations, les indications d'avertissement ou autres et de préférence des données et/ou l'énergie de fonctionnement transmise par une liaison électro-conductrice, de préférence particulièrement temporaire, ou par une liaison sans câble.
